# DEMANDE DE BREVET EUROPEEN

(11) **EP 4 056 873 A1**
(43) Date de publication de la demande: **14.09.2022**
(21) Numéro de dépôt: 21161253.6
(22) Date de dépôt: 08.03.2021
(51) Int. Cl.: F16H 47/06, B60K 1/00, F16H 61/14, F16H 37/08, F16H 45/02

(54) **CHAINE DE TRANSMISSION ELECTRIQUE POUR VEHICULE AUTOMOBILE**

(71) Demandeur: VALEO EMBRAYAGES, 80009 Amiens (FR)
(72) Inventeur: MAUREL, Hervé, 95892 CERGY PONTOISE (FR); BOIDIN, Guillaume, 95892 CERGY PONTOISE (FR); CHOLVY, Pierre, 95892 CERGY PONTOISE (FR); FOUCART, Gregory, 95892 CERGY PONTOISE (FR); TERMENON, Norberto, 95892 CERGY PONTOISE (FR); CORNIGLION, Cyrille, 95892 CERGY PONTOISE (FR)
(74) Mandataire: Valeo Powertrain Systems

(57) **Abrégé**

Chaîne de transmission électrique (1) comprenant une machine électrique (2) et au moins un pignon de sortie (3) destiné à être relié à un différentiel d'essieu (4), et au moins un dispositif de réduction de vitesse (5) comprenant un premier train d'engrenage (7) et un deuxième train d'engrenage (8) destinés à entrainer en rotation le pignon de sortie (3) suivant un premier sens de rotation (R1) ou un deuxième sens de rotation (R2).

## Description

L'invention concerne une chaîne de transmission pour un véhicule automobile. Plus particulièrement, l'invention concerne une chaîne de transmission électrique pour un véhicule automobile électrique ou hybride.

De manière connue, les dispositifs d'entrainements pour véhicule automobile électrique ou hybride comprennent une machine électrique assurant la conversion d'énergie électrique en énergie mécanique et un dispositif de réduction de vitesse relié à un différentiel d'essieu. Le système de réduction de vitesse permet d'engager le mouvement du différentiel d'essieu suivant un premier sens de rotation ou suivant un deuxième sens de rotation opposé au premier sens de rotation en inversant le sens de rotation du moteur électrique, de manière à permettre un déplacement du véhicule en marche avant ou en marche arrière.

Pour s'adapter aux différents régimes du véhicule, il est aussi connu d'utiliser des embrayages qui permettent de sélectionner le rapport de réduction souhaité au niveau du dispositif de réduction de vitesse. Ce type de dispositif est par exemple divulgué dans le document DE102016202723. De tels dispositifs sont couteux et complexes.

L'invention tend à remédier aux inconvénients cités ci-dessus et propose d'intégrer un convertisseur de couple à une chaîne de transmission électrique. Le convertisseur de couple présente en effet les avantages d'offrir une variation de rapport continue et sans rupture de couple, ainsi qu'un frein moteur notamment lorsque celui-ci présente un organe de couplage direct.

Par ailleurs, dans le cas d'une chaine de transmission dotée d'un seul rapport de vitesse, l'utilisation d'un convertisseur de couple permet de réduire les dimensions de la machine électrique.

L'invention permet aussi d'obtenir une chaine de transmission pour un véhicule électrique ou hybride fournissant d'une part une marche arrière et d'autre part une variation continue des rapports de vitesse de façon simplifiée et peu couteuse.

L'invention porte donc sur une chaîne de transmission électrique pour un véhicule comprenant au moins une machine électrique, au moins un pignon de sortie destiné à être relié à un différentiel d'essieu du véhicule et au moins un dispositif de réduction de vitesse, caractérisé en ce que la chaîne de transmission électrique comprend au moins un convertisseur de couple disposé entre la machine électrique et ledit au moins un pignon de sortie, le dispositif de réduction de vitesse comprenant au moins un premier train d'engrenage et un deuxième train d'engrenage, le premier train d'engrenage générant un mouvement du ou d'au moins un pignon de sortie suivant un premier sens de rotation et le deuxième train d'engrenage générant un mouvement du ou d'au moins un pignon de sortie suivant un deuxième sens de rotation opposé au premier sens de rotation.

Autrement dit, la chaîne de transmission est agencée de manière à ce que la machine électrique tourne dans un même sens de rotation pour entrainer le pignon de sortie dans le premier sens de rotation et dans le deuxième sens de rotation.

La chaîne de transmission électrique est un dispositif permettant de mettre en mouvement le véhicule automobile au moyen de la machine électrique convertissant l'énergie électrique en énergie mécanique, et au moyen du différentiel d'essieu auquel la chaîne de transmission électrique est reliée. Le différentiel d'essieu constitue la partie du véhicule portant au moins une roue, notamment deux, et qui reçoit l'énergie mécanique fournie par le ou les pignon(s) de sortie de la chaîne de transmission électrique.

Le dispositif de réduction de vitesse est disposé entre la machine électrique et le pignon de sortie, et est apte à générer un mouvement du/ des pignon(s) de sortie suivant le premier sens de rotation et/ou suivant le deuxième sens de rotation, opposé au premier sens de rotation.

Le premier train d'engrenage comprend alors au moins un pignon de marche avant et le deuxième train d'engrenage comprend au moins un pignon de marche arrière et un pignon inverseur, le pignon inverseur participant à la mise en rotation du pignon de sortie suivant le deuxième sens de rotation.

Le convertisseur de couple comprend un accouplement hydraulique.

Le convertisseur de couple est aussi appelé convertisseur hydraulique.

Le convertisseur de couple a pour fonction de transmettre le couple provenant de la machine électrique aux autres composants de la chaîne de transmission électrique, en démultipliant ledit couple tout en réduisant la vitesse, en particulier lors des phases de décollage/démarrage du véhicule.

Le convertisseur de couple comprend au moins un organe primaire et un organe secondaire présentant des aubes permettant de brasser un fluide et d'obtenir un entrainement mutuel en rotation, avec ou sans différence de vitesse, des organes primaire et secondaire.

L'organe primaire peut être un impulseur, notamment couplé à un couvercle.

L'organe secondaire peut être une turbine.

Un réacteur, disposé entre l'organe primaire et l'organe secondaire, permet de réorienter le flux d'huile en mouvement afin d'augmenter le couple au niveau de l'organe secondaire par rapport au couple de l'organe primaire.

Un organe de couplage direct, notamment à friction, peut être agencé entre l'organe primaire et l'organe secondaire pour les coupler sans différence de vitesse l'un par rapport à l'autre.

Le convertisseur de couple permet de démultiplier le couple en sortie de machine électrique. L'invention permet également de rendre compatible l'utilisation d'une machine électrique, générant la rotation d'un arbre moteur à vitesse élevée dans un seul sens de rotation et d'un convertisseur de couple dont les élément de transmission de couple par fluide sont également configurés pour transmettre un couple dans un seul sens de rotation, avec un dispositif de réduction de vitesse qui comprend deux sens de rotation, le premier sens de rotation et le deuxième sens de rotation, autrement dit un sens de rotation correspondant à la marche avant et un autre sens de rotation correspondant à la marche arrière.

Selon une caractéristique de l'invention, la chaîne de transmission électrique comprend au moins deux pignons de sortie destinés à être reliés au différentiel d'essieu, un premier pignon de sortie étant entrainé par le premier train d'engrenage dans le premier sens de rotation et un deuxième pignon de sortie étant entrainé par le deuxième train d'engrenage dans le deuxième sens de rotation.

La chaîne de transmission électrique comprend alors le premier pignon de sortie et le deuxième pignon de sortie, reliés au différentiel d'essieu. Cette configuration de la chaîne de transmission électrique permet de simplifier et limiter le nombre de pignon dans le dispositif de réduction de vitesse et permet ainsi la réduction en taille de la chaîne de transmission électrique par rapport à une chaîne de transmission électrique ne comprenant qu'un pignon de sortie.

Selon une caractéristique de l'invention, le convertisseur de couple est disposé dans la chaîne de transmission électrique cinématiquement entre d'une part la machine électrique et d'autre part les premier et deuxième train d'engrenages du dispositif de réduction de vitesse.

Une telle disposition du convertisseur de couple permet de démultiplier le couple de sortie de la machine électrique et ainsi d'avoir plus de couple en entrée du dispositif de réduction de vitesse qu'en sortie de machine électrique.

Selon une alternative de l'invention, le convertisseur de couple est disposé dans la chaîne de transmission électrique cinématiquement entre le premier train d'engrenage du dispositif de réduction de vitesse et ledit au moins un pignon de sortie.

Selon une autre alternative de l'invention, le convertisseur de couple est disposé dans la chaîne de transmission électrique cinématiquement entre d'une part le premier train d'engrenage et le deuxième train d'engrenage du dispositif de réduction de vitesse et d'autre part un même pignon de sortie qui est entrainable par le premier train d'engrenage dans le premier sens de rotation et par le deuxième train d'engrenage dans le deuxième sens de rotation.

Une telle disposition du convertisseur de couple, cinématiquement en aval du dispositif de réduction de vitesse, permet d'effectuer la démultiplication du couple une fois que celui-ci a traversé le dispositif de réduction de vitesse. On réduit ainsi les efforts sur le premier train d'engrenage et le deuxième train d'engrenage, ceux-ci pouvant alors présenter une taille réduite par rapport au mode de réalisation où le convertisseur de couple est cinématiquement entre la machine électrique et le dispositif de réduction de vitesse.

Selon une caractéristique de l'invention, le convertisseur de couple comprend un organe primaire et un organe secondaire entrainé en rotation par l'organe primaire sous l'effet d'un fluide projeté par l'organe primaire, le convertisseur de couple comprenant un organe de couplage direct de l'organe primaire avec l'organe secondaire, l'organe de couplage direct étant commutable entre un état ouvert et un état fermé.

Dans son état ouvert, l'organe de couplage direct désolidarise l'organe primaire et de l'organe secondaire, de tel sorte que ceux-ci sont en rotation indépendamment l'un de l'autre, c'est-à-dire que l'organe secondaire est entrainé en rotation uniquement par le fluide projeté par le l'organe primaire.

Dans son état fermé, l'organe de couplage direct est solidaire de l'organe primaire et de l'organe secondaire, de telle sorte que ceux-ci soient solidaires l'un de l'autre au moyen de l'organe de couplage direct. L'organe primaire et l'organe secondaire ont alors une rotation synchronisée, l'organe primaire emmenant en rotation l'organe secondaire par le lien mécanique généré par l'organe de couplage direct. Dans son état fermé, l'organe de couplage direct permet de générer d'une part la conversion de l'énergie mécanique en énergie électrique redirigée vers la machine électrique lors de phase de freinage ou de décélération du véhicule automobile, et d'autre part d'empêcher la démultiplication du couple, l'organe primaire et l'organe secondaire étant alors entrainés en rotation à vitesse identique.

Selon une caractéristique de l'invention, la chaîne de transmission électrique comprend au moins un réducteur de vitesse annexe disposé dans la chaîne de transmission électrique cinématiquement entre la machine électrique et le convertisseur de couple et/ou entre d'une part la machine électrique et d'autre part les premier et deuxième trains d'engrenages du dispositif de réduction de vitesse, et/ou entre d'une part le convertisseur de couple et d'autre part les premier et deuxième trains d'engrenages du dispositif de réduction de vitesse.

Le réducteur de vitesse a notamment pour fonction d'augmenter le couple tout en réduisant la vitesse de rotation en entrée du convertisseur de couple. On augmente ainsi la durée de vie de la chaîne de transmission électrique, ainsi que sa fiabilité d'utilisation. Selon une caractéristique de l'invention, le deuxième train d'engrenage est disposé en parallèle d'un sous-ensemble de transmission comprenant le premier train d'engrenage et le convertisseur de couple.

Dans cette configuration on comprend que le deuxième train d'engrenage du dispositif de réduction de vitesse est disposé dans la chaîne de transmission électrique, en contournement du sous ensemble de transmission, formé par le premier train d'engrenage et le convertisseur de couple.

Selon une caractéristique de l'invention, un dispositif d'accouplement permet de faire cheminer le couple dans l'un seulement parmi le premier train d'engrenage ou le deuxième train d'engrenage.

Selon une caractéristique de l'invention, le dispositif d'accouplement comprend un synchroniseur solidaire en rotation d'un arbre de la chaîne de transmission électrique et disposé entre le premier train d'engrenage et le deuxième train d'engrenage, le synchroniseur étant commutable entre au moins un état de mise en prise avec le premier train d'engrenage, un état de mise en prise avec le deuxième train d'engrenage et un état libre.

De manière plus précise, le synchroniseur est commutable entre un état de mise en prise du pignon de marche avant du premier train d'engrenage ou du pignon de marche arrière du deuxième train d'engrenage ou être dans un état libre. Lorsque le synchroniseur est en prise de l'un ou l'autre du pignon de marche avant ou du pignon de marche arrière, il entraine en rotation le pignon auquel il est assujetti solidairement.

Selon une caractéristique de l'invention, le dispositif d'accouplement et l'organe de couplage direct du convertisseur de couple sont déplaçables sous l'action d'un fluide sous pression, la chaîne de transmission électrique comprenant une source de fluide commune pour l'actionnement de l'organe de couplage direct du convertisseur de couple et pour l'actionnement du dispositif d'accouplement. La source de fluide peut être par exemple une pompe et un circuit d'huile.

Selon une caractéristique de l'invention, la chaîne de transmission électrique comprend un dispositif d'actionnement configuré pour fermer le dispositif de couplage direct lorsque le dispositif d'accouplement est en prise avec le deuxième train d'engrenage. Dit autrement, lorsque le pignon de sortie est entrainé en rotation suivant le deuxième sens de rotation, le dispositif de couplage direct est dans son état fermé, c'est-à-dire qu'il solidarise l'organe primaire et l'organe secondaire du convertisseur de couple. Ainsi, le deuxième train d'engrenage est directement adapté pour que la vitesse de rotation de la machine électrique soit compatible avec l'utilisation du pignon de sortie suivant le deuxième sens de rotation.

L'invention couvre également un procédé de pilotage d'une chaîne de transmission électrique de véhicule, la chaîne de transmission électrique comprenant une machine électrique, au moins un pignon de sorti connecté à un différentiel d'essieu et apte à entrainer le différentiel d'essieu dans un premier sens de rotation ou dans un deuxième sens de rotation opposé au premier sens de rotation, un convertisseur de couple disposé sur le chemin de transmission de couple entre la machine électrique et ledit au moins un pignon de sortie et apte à entrainer ledit au moins un pignon de sortie dans les deux sens de rotation, le convertisseur de couple comprenant un organe primaire et un organe secondaire entrainé en rotation par l'organe primaire sous l'effet d'un fluide projeté par l'organe primaire, le convertisseur de couple comprenant un organe de couplage direct de l'organe primaire avec l'organe secondaire, le procédé comprenant une étape de fermeture de l'organe de couplage direct lorsque le différentiel d'essieu est entrainé dans le deuxième sens de rotation, le deuxième sens de rotation étant associé à la marche arrière du véhicule ou lorsque un couple est transmis du différentiel d'essieu vers la machine électrique.

Comme évoqué précédemment, la mise en rotation du différentiel d'essieu suivant le deuxième sens de rotation ne nécessite pas de démultiplication du couple par le convertisseur de couple. Ainsi, l'organe de couplage direct solidarisé à l'organe primaire et l'organe secondaire du convertisseur de couple bloque la démultiplication du couple par le convertisseur de couple.

Selon une caractéristique du procédé de pilotage, à une étape où l'organe de couplage direct est fermé, la machine électrique est apte à convertir l'énergie cinétique du véhicule automobile en énergie électrique.

Selon une caractéristique du procédé de pilotage, la chaîne de transmission électrique comprend un premier train d'engrenage et un deuxième train d'engrenage, le premier train d'engrenage générant un mouvement du différentiel d'essieu suivant un premier sens de rotation et le deuxième train d'engrenage générant un mouvement du différentiel d'essieu suivant le deuxième sens de rotation, un dispositif d'accouplement comprenant au moins un synchroniseur permettant de faire cheminer le couple parmi le premier train d'engrenage et le deuxième train d'engrenage, l'étape de fermeture de l'organe de couplage direct étant réalisée avant ou pendant la mise en prise du synchroniseur avec le deuxième train d'engrenage.

L'invention couvre également un système de transmission comprenant au moins une chaîne de transmission électrique selon l'une quelconque des caractéristiques de la chaîne de transmission électrique précédentes et un différentiel d'essieu relié cinématiquement audit au moins un pignon de sortie.

L'invention s'étend aussi à un véhicule équipé de cette chaîne de transmission électrique ou de ce système de transmission.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig.1] est une vue schématique d'une chaîne de transmission électrique selon un premier mode de réalisation de l'invention ;
[Fig.2] est une vue schématique de la chaîne de transmission électrique selon un deuxième mode de réalisation de l'invention ;
[Fig.3] est une vue schématique de la chaîne de transmission électrique selon un troisième mode de réalisation de l'invention ;
[Fig.4] est une vue schématique de la chaîne de transmission électrique selon un quatrième mode de réalisation de l'invention ;
[Fig.5] est une vue schématique de la chaîne de transmission électrique selon un cinquième mode de réalisation de l'invention.

Les figures de la description détaillées, illustrent schématiquement une chaîne de transmission électrique 1, selon différents modes de réalisation, utilisée comme moyen d'entrainement pour un véhicule automobile, en particulier un véhicule automobile électrique ou encore un véhicule automobile hybride. Ces types de véhicules automobiles comprennent habituellement au moins un différentiel d'essieu 4 pouvant être entrainé en rotation de manière exclusivement électrique ou, alternativement, au moyen d'un moteur à combustion interne.

Pour réaliser l'entrainement en rotation du différentiel d'essieu 4, la chaîne de transmission électrique 1 comprend entre autres une machine électrique 2 assurant la conversion d'une énergie électrique en énergie mécanique et au moyen duquel ledit différentiel d'essieu 4, et donc le véhicule automobile est mis en mouvement. Afin de relier le différentiel d'essieu 4 à la chaîne de transmission électrique 1, cette dernière comprend au moins un pignon de sortie 3 disposé à une extrémité de la chaîne de transmission électrique 1 opposée à la machine électrique 2. On comprend alors que le pignon de sortie 3 correspond à une interface de la chaîne de transmission électrique 1 avec le différentiel d'essieu 4, permettant de relier cette dernière au différentiel d'essieu 4.

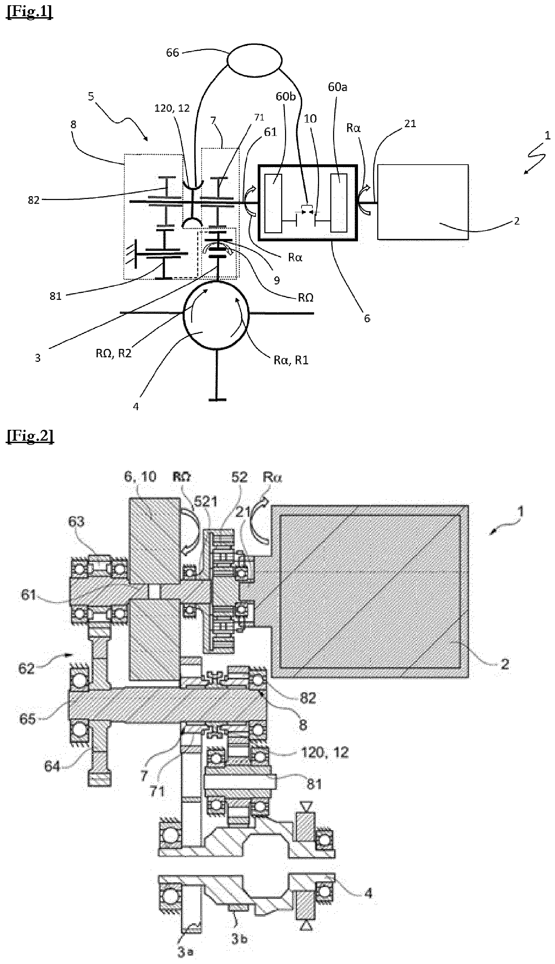

La figure 1 illustre un premier mode de réalisation de la chaîne de transmission électrique 1 comprenant la machine électrique 2, un convertisseur de couple 6, un dispositif de réduction de vitesse 5, l'ensemble étant relié au différentiel d'essieu 4 au moyen du pignon de sortie 3 de la chaîne de transmission électrique 1.

La machine électrique 2 positionnée à une extrémité de la chaîne de transmission électrique 1 permet comme évoqué précédemment, d'entrainer le véhicule en mouvement ou de générer de l'électricité dans certaines phases de déplacement du véhicule. A cette fin, la machine électrique 2 comprend un arbre moteur 21 qui est mis en rotation suivant un sens de rotation alpha Rα, autour d'un axe de révolution de l'arbre moteur 21. L'arbre moteur 21 est donc solidarisé d'une part à la machine électrique 2 et d'autre part au convertisseur de couple 6. On notera que le sens de rotation de l'arbre moteur 21 demeure identique quel que soit le sens de rotation du différentiel d'essieu 4, c'est-à-dire que le véhicule se déplace en marche avant ou en marche arrière.

Le convertisseur de couple 6, aussi appelé convertisseur hydraulique, a pour fonction de transmettre le couple provenant de la machine électrique 2 aux autres composants de la chaîne de transmission électrique 1, en démultipliant ledit couple tout en réduisant la vitesse, en particulier lors des phases de décollage/démarrage du véhicule. Le convertisseur de couple 6 comprend au moins un organe primaire 60a, un organe secondaire 60b, un réacteur et un organe de couplage direct 10, l'ensemble étant logé dans un carter. L'organe primaire 60a et l'organe secondaire 60b présentent des aubes, permettant de brasser un fluide et d'obtenir un entrainement mutuel en rotation, avec ou sans différence de vitesse, des organes primaire et secondaire.

De manière plus précise, l'organe primaire 60a du convertisseur de couple 6 est solidaire de l'arbre moteur 21 afin que cet organe primaire 60a soit entrainé en rotation suivant le sens de rotation alpha Rα. Le mouvement en rotation de l'organe primaire 60a du convertisseur de couple 6 génère une projection centrifuge d'un fluide logé dans le carter au moyen des aubes qu'il comporte, le fluide étant par exemple de l'huile. La projection de l'huile entraine en rotation l'organe secondaire 60b du convertisseur de couple 6 suivant le même sens de rotation alpha Rα de l'arbre moteur 21.

Le réacteur est disposé entre le l'organe primaire 60a et l'organe secondaire 60b et se présente comme une turbine permettant de réorienter le flux d'huile en mouvement dans le carter afin d'augmenter le couple au niveau de l'organe secondaire 60b par rapport au couple de l'organe primaire 60a.

Le convertisseur de couple 6 permet alors, particulièrement lors des phases de démarrage/décollage du véhicule, de démultiplier le couple venant de la machine électrique 2 avant son arrivée dans le dispositif de réduction de vitesse 5, et de diminuer la vitesse de rotation du différentiel d'essieu 4. Également le convertisseur de couple 6 présente l'avantage d'une transmission du couple plus souple, notamment de par son fonctionnement hydraulique.

L'organe de couplage direct 10 du convertisseur de couple 6 est un dispositif permettant de relier l'organe primaire 60a et l'organe secondaire 60b, notamment par friction, sans différence de vitesse l'un par rapport à l'autre. De manière plus précise, l'organe de couplage direct 10 est commutable en une position ouverte, dit autrement une position où l'organe primaire 60a et l'organe secondaire 60b sont désolidarisés, et une position fermée, dit autrement une position où l'organe primaire 60a et l'organe secondaire 60b tourne à la même vitesse car reliés l'un à l'autre au moyen de l'organe de couplage direct 10.

L'organe de couplage direct 10 permet de limiter les pertes d'énergie entre l'organe primaire 60a et l'organe secondaire 60b en les solidarisant lorsque ceux-ci tournent à une même vitesse, et assure ainsi une transmission du couple optimale. Dans un tel cas, la vitesse à l'entrée du convertisseur de couple est égale à la vitesse de sortie du convertisseur de couple 6. On évite également une surconsommation d'énergie de la chaîne de transmission électrique 1 lorsque l'organe primaire 60a et l'organe secondaire 60b sont en rotation à une même vitesse. L'utilisation et l'intérêt d'un tel organe de couplage 10 seront exposés plus en détail dans la suite de la description détaillée.

L'organe secondaire 60b est relié en sortie de convertisseur de couple 6 à un arbre de transmission 61 du couple. L'arbre de transmission 61 est donc solidarisé dans ce premier mode de réalisation, d'une part à l'organe secondaire 60b du convertisseur de couple 6 et d'autre part au dispositif de réduction de vitesse 5. On comprend alors que le dispositif de réduction de vitesse 5 est positionné cinématiquement entre le convertisseur de couple 6 et le pignon de sortie 3.

Le dispositif de réduction de vitesse 5 comprend au moins un premier train d'engrenage 7 et un deuxième train d'engrenage 8.

Le premier train d'engrenage 7, aussi appelé ci-dessous train d'engrenage de marche avant, permet de générer un mouvement du pignon de sortie 3 suivant un premier sens de rotation R1, associé à la marche avant du véhicule automobile. Le deuxième train d'engrenage 8, aussi appelé train d'engrenage de marche arrière, permet de générer un mouvement du pignon de sortie 3 suivant un deuxième sens de rotation R2 opposé au premier sens de rotation R1, et associé à la marche arrière du véhicule automobile.

Le premier train d'engrenage 7 comprend au moins un pignon de marche avant 71 et un pignon intermédiaire 9. De manière plus précise, le pignon de marche avant 71 est disposé dans la chaîne de transmission électrique 1, cinématiquement entre le convertisseur de couple 6 et le pignon intermédiaire 9. Il est disposé autour de l'arbre de transmission 61 du convertisseur de couple 6. Le pignon de marche avant 71 est donc mobile en rotation autour de l'arbre de transmission 61 du convertisseur de couple 6, c'est-à-dire monté fou.

Le pignon intermédiaire 9 est lui disposé dans la chaîne de transmission électrique 1, cinématiquement entre le pignon de marche avant 71 et le pignon de sortie 3.

Le deuxième train d'engrenage 8 comprend un pignon de marche arrière 82, un pignon inverseur 81 relié au pignon intermédiaire 9. Le pignon de marche arrière 82 est disposé dans la chaîne de transmission électrique 1 cinématiquement entre l'arbre de transmission 61 du convertisseur de couple 6 et le pignon inverseur 81. Le pignon de marche arrière 82 est monté libre ou fou par rapport à l'arbre de transmission 61 du convertisseur de couple.

Le pignon inverseur 81 est disposé dans la chaîne de transmission électrique 1 cinématiquement entre le pignon de marche arrière 82 et le pignon intermédiaire 9 et est mobile en rotation par rapport à un carter dans lequel il est disposé.

Afin d'entrainer en rotation le pignon de sortie 3 suivant le premier sens de rotation R1 ou le deuxième sens de rotation R2, un dispositif d'accouplement 120, comprenant par exemple un synchroniseur 12, est disposé dans la chaîne de transmission électrique 1, entre le pignon de marche avant 71 du premier train d'engrenage 7 et le pignon de marche arrière 82 du deuxième train d'engrenage 8. Le synchroniseur 12 est monté solidaire de l'arbre de transmission 61 et est commutable entre un état en prise du premier train d'engrenage 7 et un état en prise du deuxième train d'engrenage 8.

De manière plus précise, le synchroniseur 12 est disposé dans la chaîne de transmission électrique 1 entre le pignon de marche avant 71 et le pignon de marche arrière 82 et peut donc être en prise de manière alternative avec le pignon de marche avant 71 ou avec le pignon de marche arrière 82. Le synchroniseur 12 permet donc de transférer le mouvement de rotation de l'arbre de transmission 61 du convertisseur de couple 6 suivant le sens de rotation alpha Rα, vers l'un ou l'autre du pignon de marche avant 71 ou du pignon de marche arrière 82.

Lorsque le synchroniseur 12 est mis en prise avec le pignon de marche avant 71, celui-ci est entrainé en rotation suivant le sens de rotation alpha Rα, correspondant au sens de rotation de l'arbre de transmission 61. Cette rotation du pignon de marche avant 71 entraine en rotation le pignon intermédiaire 9, suivant un sens de rotation opposé à celui du pignon de marche avant 71, correspondant à un sens de rotation oméga RΩ. Enfin le pignon intermédiaire 9 emmène en rotation le pignon de sortie 3 suivant le sens de rotation opposé au sens de rotation oméga RΩ, c'est-à-dire suivant le sens de rotation alpha Rα. Le sens de rotation alpha Rα du pignon de sortie 3 correspond alors au premier sens de rotation R1 du pignon de sortie 3, ce dernier entrainant le différentiel d'essieu 4 suivant un sens correspondant à la marche avant du véhicule automobile. Lorsque le synchroniseur 12 est mis en prise avec le pignon de marche arrière 82, celui-ci est entrainé en rotation suivant le sens de rotation alpha Rα correspondant au sens de rotation de l'arbre de transmission 61 du convertisseur de couple 6.

Le pignon inverseur 81 est alors entraîné en rotation par le pignon de marche arrière 82 suivant un sens de rotation opposé à ce dernier, c'est-à-dire suivant le sens de rotation oméga RΩ. On comprend alors que ce même pignon inverseur 81 emmène en rotation le pignon intermédiaire 9 suivant un sens de rotation opposé au sein, c'est-à-dire le sens de rotation alpha Rα, le pignon intermédiaire 9 entrainant ensuite en rotation le pignon de sortie 3 suivant le sens de rotation opposé, c'est-à-dire suivant le sens de rotation oméga RΩ. Le sens de rotation oméga RΩ du pignon de sortie 3 correspond alors au deuxième sens de rotation R2 du pignon de sortie 3, ce dernier entrainant en mouvement le différentiel d'essieu 4 suivant un sens correspondant à la marche arrière du véhicule automobile.

On comprend de ce qui précède que le pignon de sortie 3 peut être entrainé en rotation suivant le premier sens de rotation R1 ou suivant le deuxième sens de rotation R2, de par la configuration du premier train d'engrenage 7 et du deuxième train d'engrenage 8 comprenant le pignon inverseur 81 et de par la position du synchroniseur 12 commutable entre le pignon de marche avant 71 ou le pignon de marche arrière 82.

Selon une caractéristique de l'invention, la chaîne de transmission électrique 1 comprend un dispositif d'actionnement 66 configuré pour fermer le dispositif de couplage direct 10 du convertisseur de couple 6 avant ou pendant la mise en prise du synchroniseur 12 avec le pignon de marche arrière 82 du deuxième train d'engrenage 8. Lors de la mise en rotation du pignon de sortie 3, et donc du différentiel d'essieu 4, suivant le deuxième sens de rotation R2, la démultiplication du couple en sortie de machine électrique n'est pas nécessaire. En effet, le deuxième train d'engrenage 8 est directement adapté pour que la vitesse de rotation générée par la machine électrique 2 soit compatible avec l'utilisation du pignon de sortie 3 suivant le deuxième sens de rotation R2. Le rapport de démultiplication entre le premier train d'engrenage 7 et deuxième train d'engrenage 8 est différent. Le dispositif de couplage direct 10 permet ainsi la transmission directe du couple et de la vitesse générés par la machine électrique 2 au deuxième train d'engrenage 8, c'est-à-dire sans démultiplication.

Le rapport de démultiplication entre le premier train d'engrenage 7 et le deuxième train d'engrenage 8 peuvent aussi être égaux.

Toujours selon une caractéristique de l'invention, lorsque l'organe primaire 60a et l'organe secondaire 60b sont entrainés en rotation suivant une vitesse identique et constante, il est possible de fermer l'organe de couplage direct 10. Cette configuration fermée de l'organe de couplage direct 10, permet alors d'une part la conversion de l'énergie mécanique en énergie électrique redirigée vers la machine électrique 2 lors de phase de freinage ou de décélération du véhicule automobile, et d'autre part d'empêcher la démultiplication du couple par le convertisseur de couple 6, l'organe primaire 60a et l'organe secondaire 60b étant alors entrainés en rotation à vitesse identique.

La figure 2 illustre une alternative du premier mode de réalisation de la chaîne de transmission électrique 1 illustré à la figure 1. Dans la suite de la description, seule les caractéristiques distinctes par rapport au premier mode de réalisation seront exposées. Pour les caractéristiques communes, il conviendra de se reporter à la figure 1 et à sa description.

La chaîne de transmission électrique 1 du deuxième mode de réalisation de l'invention comprend un réducteur de vitesse annexe 52, disposé cinématiquement entre la machine électrique 2 et le convertisseur de couple 6. Le réducteur de vitesse annexe 52 prend la forme d'un train planétaire épicycloïdale, dont un pignon planétaire central est solidaire de l'arbre moteur 21. Le réducteur de vitesse annexe 52 comprend également au moins une couronne dans lequel sont logés par exemple trois satellites en prise avec le pignon planétaire central et la couronne. L'ensemble des arbres des satellites sont portés par un porte-satellite qui est, dans ce mode réalisation, fixe par rapport au carter de la chaîne de transmission.

La rotation de l'arbre moteur 21 suivant le sens de rotation alpha Rα entraine alors le pignon planétaire central en rotation suivant le sens de rotation alpha Rα, qui lui-même met en rotation autour de leur axes respectifs chaque satellite logés dans la couronne. La couronne est alors mise en rotation par les satellites. Un tel dispositif permet d'augmenter le couple tout en réduisant la vitesse de rotation d'un arbre de sortie de train planétaire 521, ce dernier étant par ailleurs relié au convertisseur de couple 6. L'arbre de sortie de train planétaire 521 est donc relié d'une part au réducteur de vitesse annexe 52 et à l'organe primaire 60a du convertisseur de couple 6, et est entrainé en rotation suivant le sens de rotation alpha RΩ.

Le porte satellite est ici fixe par rapport au carter mais dans un autre mode de réalisation non représenté, il est possible de fixer la couronne et d'entrainer le convertisseur de couple au moyen du porte satellites suivant le sens de rotation alpha Rα.

Également dans ce deuxième mode de réalisation de la chaîne de transmission électrique 1, une pignonnerie annexe 62 est disposée sur la chaine de transmission électrique 1, cinématiquement entre le convertisseur de couple 6 et le dispositif de réduction de vitesse 5. Cette pignonnerie ou train d'engrenage annexe forme un étage de réduction supplémentaire et joue donc le rôle également de réducteur annexe.

Ce train d'engrenages annexe est disposé entre l'arbre de transmission 61 en sortie du convertisseur de couple et un arbre intermédiaire 65.

De manière plus précise, un premier pignon annexe 63 est monté solidaire en rotation de l'arbre de transmission 61, cinématiquement entre le convertisseur de couple 6 et un deuxième pignon annexe 64. Le deuxième pignon annexe 64 est monté solidaire en rotation de l'arbre intermédiaire 65 sur lequel est également disposé le synchroniseur 12 entre le pignon de marche avant 71 et le pignon de marche arrière 81.

On comprend alors que le l'arbre intermédiaire 65 de la pignonnerie annexe 62 est entrainé en rotation au moyen du deuxième pignon annexe 64 et du premier pignon annexe 63, ce dernier étant solidaire en rotation de l'arbre de transmission 61 du convertisseur de couple 6. Ainsi l'arbre intermédiaire 65 permet d'entrainer en rotation le pignon de marche avant 71 ou le pignon de marche arrière 82, au moyen du synchroniseur 12 tel que précédemment décrit.

Le réducteur de vitesse annexe 52 disposé dans la chaîne de transmission électrique 1 permet d'augmenter la durée de vie des composants de la chaîne de transmission électrique 1, et notamment du convertisseur de couple 6 en réduisant la vitesse de rotation de l'arbre de train planétaire 521, solidaire de l'organe primaire 60a du convertisseur de couple 6.

Ce mode de réalisation se caractérise aussi par la présence de deux pignons de sortie 3a et 3b. Il faut ici noter que la figure 2 est une vue modifiée de sorte que les trois arbres soient présentés sur le même plan. En réalité, ces trois arbres ne sont pas sur un même plan, c'est pourquoi l'engrènement entre les pignons 71 et 3a n'est pas visible sur cette vue. L'utilisation de deux pignons de sortie permet d'éviter de mettre en œuvre un pignon intermédiaire devant engrener à la fois avec les pignons de marche avant et de marche arrière.

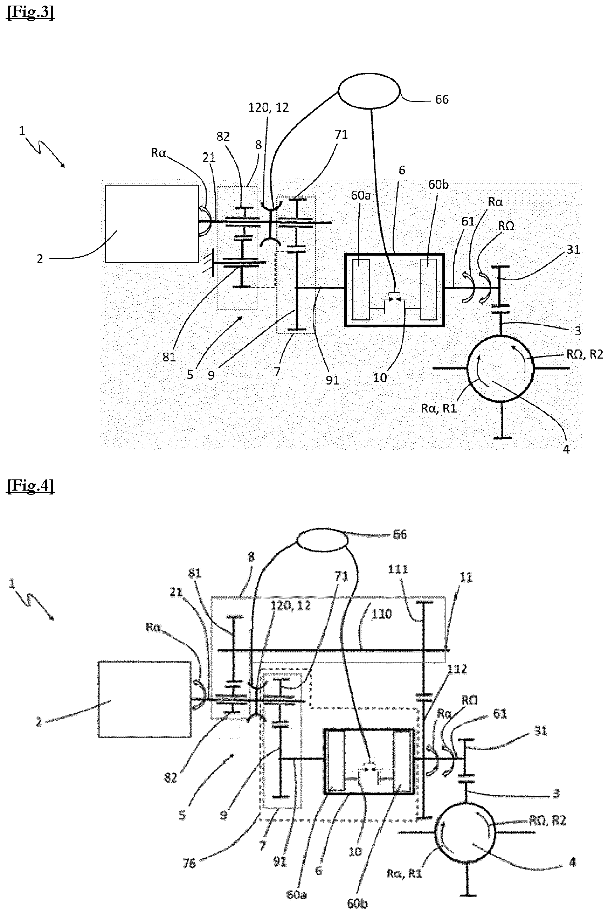

Un troisième mode de réalisation va maintenant être décrit en rapport avec la figure 3. Dans ce mode de réalisation, le convertisseur de couple 6 est disposé dans la chaîne de transmission électrique 1, cinématiquement entre le dispositif de réduction de vitesse 5 et le pignon de sortie 3. On comprend alors que l'entrée du premier train d'engrenage 7 ou le deuxième engrenage 8 du dispositif de réduction de vitesse 5, tournent à la même vitesse et reçoivent le même couple que ceux générés par l'arbre moteur 21 de la machine électrique 2.

Un arbre intermédiaire 91 s'étend entre le dispositif de réduction de vitesse 5 et le convertisseur de couple 6. De manière plus précise, l'arbre intermédiaire 91 est solidaire du pignon intermédiaire 9 du dispositif de réduction de vitesse 5 et de l'organe primaire 60a du convertisseur de couple 6.

On comprend alors que l'organe primaire 60a du convertisseur de couple 6 peut suivre un mouvement rotatif suivant le sens de rotation alpha Rα ou le sens de rotation oméga RΩ suivant que le synchroniseur 12 est en prise avec le pignon de marche avant 71 ou avec le pignon de marche arrière 82 du dispositif de réduction de vitesse 5.

Un pignon de liaison 31 est disposé dans la chaîne de transmission électrique 1, cinématiquement entre le convertisseur de couple 6 et le pignon de sortie 3. De manière plus précise, le pignon de liaison 31 est solidaire de l'arbre de transmission 61 d'une part et entraine le pignon de sortie 3 en rotation d'autre part. Ledit pignon de liaison 31 est alors entrainé en rotation suivant le sens de rotation oméga RΩ ou le sens de rotation alpha Rα par l'arbre de transmission 61 afin qu'il entraine lui-même en rotation le pignon de sortie 3 suivant un sens de rotation opposé à celui dans lequel il est en rotation.

La géométrie des aubes du convertisseur de couple étant configurée pour transmettre le couple dans un seul sens de rotation, il est avantageux, lorsque le synchroniseur 12 est en prise sur le pignon de marche arrière 82, que l'organe de couplage direct 10 soit fermé afin que le l'organe primaire 60a et l'organe secondaire 60b du convertisseur de couple 6 soient solidaires l'un de l'autre.

Un avantage de ce mode de réalisation est qu'il permet la réduction en taille du premier train d'engrenage 7 et du deuxième train d'engrenage 8 en raison de leur positionnement cinématique en amont du convertisseur de couple 6. En effet, en l'absence de réducteur annexe entre la machine électrique et les trains d'engrenage 7 et 8, le couple en entrée du dispositif de réduction de vitesse 5 n'est pas démultiplié. Cette configuration diminue alors l'effort appliqué au premier train d'engrenage 7 et au deuxième train d'engrenage 8, par rapport aux modes de réalisation précédents et permet ainsi une diminution en taille du dispositif de réduction de vitesse 5 par rapport aux modes de réalisation précédents.

Selon une alternative non représentée du troisième mode de réalisation, il est possible de disposer le réducteur de vitesse annexe décrit en rapport avec la figure 2 cinématiquement en sortie de la machine électrique 2. Le réducteur de vitesse annexe est alors disposé dans la chaîne de transmission électrique 1, cinématiquement entre la machine électrique 2 et le dispositif de réduction de vitesse 5.

Un quatrième mode de réalisation va maintenant être décrit en rapport avec la figure 4. Ce quatrième mode de réalisation est une variante du troisième mode de réalisation de l'invention, et il conviendra donc de se reporter à la figure 3 pour les caractéristiques identiques au troisième mode de réalisation.

Dans ce mode de réalisation, le deuxième train d'engrenage 8 n'est plus agencé entre la machine électrique et le convertisseur de couple mais est disposé en parallèle d'un sous ensemble de transmission 76 formé par le premier train d'engrenage 7 et par le convertisseur de couple 6. De manière plus précise, le deuxième train d'engrenage 8 relie l'arbre de sortie de la machine électrique et l'arbre de transmission en sortie de convertisseur de couple. Dans l'exemple illustré de la figure 4, le deuxième train d'engrenage 8comprend un arbre additionnel 110, et deux pignons additionnels, c'est-à-dire un premier pignon additionnel 111 et un deuxième pignon additionnel 112, mais on comprend que le deuxième train d'engrenage 8 peut inclure plus ou moins d'arbres additionnels et de pignons additionnels.

L'arbre additionnel 110 du deuxième train d'engrenage 8 est solidaire d'une part du pignon inverseur 81, et d'autre part du premier pignon additionnel 111. Le deuxième pignon additionnel 112 est disposé dans la chaîne de transmission électrique 1, cinématiquement entre le premier pignon additionnel 111 et l'arbre de transmission 61. On comprend alors que le premier pignon additionnel 111 entraine en rotation le deuxième pignon additionnel 112 et que ce dernier entraine en rotation l'arbre de transmission 61 disposé à la sortie du convertisseur de couple 6.

L'arbre de transmission 61 solidaire du pignon de liaison 31 entraine alors ce dernier en rotation suivant le sens de rotation alpha Rα ou le sens de rotation oméga RQ, suivant que le synchroniseur 12 est en prise avec le pignon de marche avant 71 ou le pignon de marche arrière 82. Par la suite, le pignon de liaison 31 entraine le pignon de sortie 3 en rotation suivant le premier sens de rotation R1 ou le deuxième sens de rotation R2.

On comprend alors que dans ce mode de réalisation, le pignon inverseur 81 et le pignon intermédiaire 9 ne sont plus en prises l'un de l'autre et que la mise en rotation du pignon de sortie 3 suivant le deuxième sens de rotation R2 est effectuée par une ligne de transmission d'effort disposée en parallèle du premier train d'engrenage 7 et du convertisseur de couple 6.

Cette configuration particulière du deuxième train d'engrenage 8 lui permet de contourner le convertisseur de couple 6 et son organe de couplage direct 10. En effet, pour certains véhicules, les avantages de la transmission par le convertisseur de couple ne sont pas utiles en marche arrière et il peut être préférable de contourner le convertisseur de couple en marche arrière. Ainsi, le deuxième train d'engrenage 8 est directement adapté pour que la vitesse de rotation de l'arbre moteur 21 en sortie de machine électrique 2 soit compatible avec l'utilisation du pignon de sortie 3 suivant le deuxième sens de rotation R2.

Tout comme pour le troisième mode de réalisation de l'invention, il est possible d'intégrer un réducteur de vitesse annexe en sortie de la machine électrique 2. Le réducteur de vitesse annexe est alors disposé dans la chaîne de transmission électrique 1, cinématiquement entre la machine électrique 2 et les premier et deuxième trains d'engrenage du dispositif de réduction de vitesse 5.

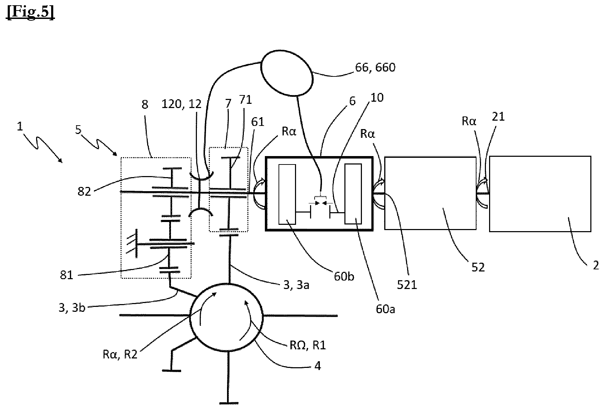

Un cinquième mode de réalisation de la chaîne de transmission électrique 1 va maintenant être décrit en rapport avec la figure 5. Ce mode de réalisation est une variante du deuxième mode de réalisation, et on comprend que seules les caractéristiques distinctes par rapport à ce deuxième mode de réalisation seront évoquées dans la suite de la description.

Dans ce mode de réalisation, le premier train d'engrenage 7 comprend le pignon de marche avant 71 et le deuxième train d'engrenage 8 comprend le pignon de marche arrière 82 et le pignon inverseur 81. Toujours selon ce mode de réalisation, la chaîne de transmission électrique 1 comprend deux pignons de sortie 3, un premier pignon de sortie 3a et un deuxième pignon de sortie 3b, solidaires de part et d'autre du différentiel d'essieu 4.

Le pignon de marche avant 71 du premier train d'engrenage 7 est alors lié en rotation avec le premier pignon de sortie 3a, tandis que le pignon inverseur 81 du deuxième train d'engrenage 8 est lié en rotation avec le deuxième pignon de sortie 3b.

Dans ce cinquième mode de réalisation de l'invention, le pignon de marche avant 71 entrainé en rotation suivant le sens de rotation alpha Rα, par l'arbre de transmission de couple 61 du convertisseur de couple 6 et par le synchroniseur 12, entraine alors en rotation le premier pignon de sortie 3a suivant le sens de rotation oméga RΩ. On comprend alors que dans ce cinquième mode de réalisation de l'invention, le sens de rotation oméga RΩ correspond au premier sens de rotation R1 du premier pignon de sortie 3a.

Toujours selon ce cinquième mode de réalisation de l'invention, le pignon de marche arrière 82 entrainé en rotation suivant le sens de rotation alpha Rα, par l'arbre de transmission de couple 61 du convertisseur de couple 6 et par le synchroniseur 12, entraine alors en rotation le pignon inverseur 81 suivant le sens de rotation oméga RΩ. Le pignon inverseur 81 entraine par la suite le deuxième pignon de sortie 3b en rotation suivant le sens de rotation opposé au sien, c'est-à-dire suivant le sens de rotation alpha Rα, correspondant dans ce cinquième mode de réalisation au deuxième sens de rotation R2 du deuxième pignon de sortie 3b.

Tout comme le deuxième mode de réalisation de l'invention, la chaîne de transmission électrique 1 comprend le réducteur de vitesse annexe 52, disposé cinématiquement entre la machine électrique 2 et le convertisseur de couple 6. Ce réducteur de vitesse annexe 52 permet d'augmenter le couple tout en réduisant la vitesse de rotation de l'arbre de train planétaire 521, ce dernier étant relié au convertisseur de couple 6.

Toujours selon ce cinquième mode de réalisation et suivant une alternative non illustrée, le dispositif d'accouplement 120, comprenant le synchroniseur 12, et l'organe de couplage direct 10 du convertisseur de couple 6 sont commutables sous l'action d'un fluide sous pression. Suivant cette alternative, la chaîne de transmission électrique 1 peut alors comprendre une source de fluide 660, par exemple une source d'huile, commune à l'actionnement de l'organe de couplage direct 10 et l'actionnement du synchroniseur 12. On considère alors que l'ensemble des modes de réalisation précédemment décrits peuvent comprendre la source de fluide 660 permettant d'actionner simultanément l'organe de couplage direct 10 et le synchroniseur 12 du dispositif d'accouplement 120.

Bien sûr, l'invention n'est pas limitée aux exemples qui viennent d'être décrits et de nombreux aménagements peuvent être apportés à ces exemples sans sortir du cadre de l'invention.

L'invention, telle qu'elle vient d'être décrite, atteint bien le but qu'elle s'était fixé, et permet de proposer chaîne de transmission électrique plus ergonomique et présentant une transmission du couple améliorée. Des variantes non décrites ici pourraient être mises en œuvre sans sortir du contexte de l'invention, dès lors que, conformément à l'invention, elles comprennent au moins une chaîne de transmission électrique conforme à l'aspect de l'invention.

## Revendications

1. Chaîne de transmission électrique (1) pour un véhicule comprenant au moins une machine électrique (2), au moins un pignon de sortie (3, 3a, 3b) destiné à être relié à un différentiel d'essieu (4) du véhicule et au moins un dispositif de réduction de vitesse (5), **caractérisé en ce que** la chaîne de transmission électrique (1) comprend au moins un convertisseur de couple (6) disposé entre la machine électrique (2) et ledit au moins un pignon de sortie (3), le dispositif de réduction de vitesse (5) comprenant au moins un premier train d'engrenage (7) et un deuxième train d'engrenage (8), le premier train d'engrenage (7) générant un mouvement du ou d'au moins un pignon de sortie (3) suivant un premier sens de rotation (R1) et le deuxième train d'engrenage (8) générant un mouvement du ou d'au moins un pignon de sortie (3) suivant un deuxième sens de rotation (R2) opposé au premier sens de rotation (R1).

2. Chaîne de transmission électrique (1) selon la revendication précédente, comprenant au moins deux pignons de sortie (3a, 3b) destinés à être reliés au différentiel d'essieu, un premier pignon de sortie (3a) étant entrainé par le premier train d'engrenage (7) dans le premier sens de rotation (R1) et un deuxième pignon de sortie (3b) étant entrainé par le deuxième train d'engrenage (8) dans le deuxième sens de rotation (R2).

3. Chaîne de transmission électrique (1) selon l'une quelconque des revendications précédentes, dans laquelle le convertisseur de couple (6) est disposé dans la chaîne de transmission électrique (1) cinématiquement entre d'une part la machine électrique (2) et d'autre part les premier et deuxième train d'engrenages (7, 8) du dispositif de réduction de vitesse (5).

4. Chaîne de transmission électrique (1) selon l'une quelconque des revendications 1 ou 2, dans laquelle le convertisseur de couple (6) est disposé dans la chaîne de transmission électrique (1) cinématiquement entre le premier train d'engrenage (7) du dispositif de réduction de vitesse (5) et ledit au moins un pignon de sortie (3, 3a, 3b).

5. Chaîne de transmission électrique (1) selon l'une quelconque des revendications 1 ou 2, dans laquelle le convertisseur de couple (6) est disposé dans la chaîne de transmission électrique (1) cinématiquement entre d'une part le premier train d'engrenage (7) et le deuxième train d'engrenage (8) du dispositif de réduction de vitesse (5) et d'autre part un même pignon de sortie (3) qui est entrainable par le premier train d'engrenage (7) dans le premier sens de rotation (R1) et par le deuxième train d'engrenage (8) dans le deuxième sens de rotation (R2).

6. Chaîne de transmission électrique (1) selon l'une quelconque des revendications précédentes, dans laquelle un dispositif d'accouplement (120) permet de faire cheminer le couple dans l'un seulement parmi le premier train d'engrenage (7) ou le deuxième train d'engrenage (8).

7. Chaîne de transmission électrique (1) selon l'une quelconque des revendications précédentes, dans laquelle le convertisseur de couple (6) comprend un organe primaire (60a) et un organe secondaire (60b) entrainé en rotation par l'organe primaire (60a) sous l'effet d'un fluide projeté par l'organe primaire (60a), le convertisseur de couple (6) comprenant un organe de couplage direct (10) de l'organe primaire (60a) avec l'organe secondaire (60b), l'organe de couplage direct (10) étant commutable entre un état ouvert et un état fermé.

8. Chaîne de transmission électrique (1) selon les revendications 6 et 7, dans laquelle le dispositif d'accouplement (120) et l'organe de couplage direct (10) du convertisseur de couple (6) sont déplaçables sous l'action d'un fluide sous pression, la chaîne de transmission électrique (1) comprenant une source de fluide (660) commune pour l'actionnement de l'organe de couplage direct (10) du convertisseur de couple (6) et pour l'actionnement du dispositif d'accouplement (120).

9. Chaîne de transmission électrique (1) selon l'une quelconque des revendications précédentes, comprenant au moins un réducteur de vitesse annexe (52, 62) disposé dans la chaîne de transmission électrique (1) cinématiquement entre la machine électrique (2) et le convertisseur de couple (6) et/ou entre d'une part la machine électrique (2) et d'autre part les premier et deuxième trains d'engrenages (7, 8) du dispositif de réduction de vitesse (5), et/ou entre d'une part le convertisseur de couple (6) et d'autre part les premier et deuxième trains d'engrenages (7, 8), du dispositif de réduction de vitesse (5).

10. Chaîne de transmission électrique (1) selon la revendication 1 ou 4, dans laquelle le deuxième train d'engrenage (8) est disposée en parallèle d'un sous-ensemble de transmission (76) comprenant le premier train d'engrenage (7) et le convertisseur de couple (6).

11. Chaîne de transmission électrique (1) selon l'une quelconque des revendications 6 ou 8, dans laquelle le dispositif d'accouplement (120) comprend un synchroniseur (12) solidaire en rotation d'un arbre (21, 61) de la chaîne de transmission électrique (1) et disposée entre le premier train d'engrenage (7) et le deuxième train d'engrenage (8), le synchroniseur (12) étant commutable entre au moins un état de mise en prise avec le premier train d'engrenage (7), un état de mise en prise avec le deuxième train d'engrenage (8) et un état libre.

12. Chaîne de transmission électrique (1) selon les revendications 5, 6 et 7, comprenant un dispositif d'actionnement (66) configuré pour fermer le dispositif de couplage direct (10) lorsque le dispositif d'accouplement (120) est en prise avec le deuxième train d'engrenage (8).

13. Système de transmission comprenant au moins une chaîne de transmission électrique (1) selon l'une quelconque de revendications 1 à 12 et un différentiel d'essieu (4) relié cinématiquement audit au moins un pignon de sortie (3).

14. Procédé de pilotage d'une chaîne de transmission électrique (1) de véhicule, la chaîne de transmission électrique (1) comprenant une machine électrique (2), au moins un pignon de sortie (3) connecté à un différentiel d'essieu (4) et apte à entrainer le différentiel d'essieu (4) dans un premier sens de rotation (R1) ou dans un deuxième sens de rotation (R2) opposé au premier sens de rotation (R1), un convertisseur de couple (6) disposé sur le chemin de transmission de couple entre la machine électrique (2) et ledit au moins un pignon de sortie (3) et apte à entrainer ledit au moins un pignon de sortie (3) dans les deux sens de rotation (R1, R2), le convertisseur de couple (6) comprenant un organe primaire (60a) et un organe secondaire (60b) entrainé en rotation par l'organe primaire (60a) sous l'effet d'un fluide projeté par l'organe primaire (60a), le convertisseur de couple (6) comprenant un organe de couplage direct (10) de l'organe primaire (60a) avec l'organe secondaire (60b), le procédé comprenant une étape de fermeture de l'organe de couplage direct (10) lorsque le différentiel d'essieu (4) est entrainé dans le deuxième sens de rotation (R2), le deuxième sens de rotation (R2) étant associé à la marche arrière du véhicule ou lorsqu'un couple est transmis du différentiel d'essieu (4) vers la machine électrique (2).

15. Procédé de pilotage selon la revendication 14, la chaîne de transmission électrique (1) comprenant un premier train d'engrenage (7) et un deuxième train d'engrenage (8), le premier train d'engrenage (7) générant un mouvement du différentiel d'essieu (4) suivant un premier sens de rotation (R1) et le deuxième train d'engrenage (8) générant un mouvement du différentiel d'essieu (4) suivant le deuxième sens de rotation (R2), un dispositif d'accouplement (120) comprenant au moins un synchroniseur (12) permettant de faire cheminer le couple parmi le premier train d'engrenage (7) et le deuxième train d'engrenage (8), l'étape de fermeture de l'organe de couplage direct (10) étant réalisée avant ou pendant la mise en prise du synchroniseur (12) avec le deuxième train d'engrenage (8).
